# EUROPEAN PATENT APPLICATION

(11) **EP 2 647 665 A1**
(43) Date of publication of application: **09.10.2013**
(21) Application number: 10857940.0
(22) Date of filing: 01.10.2010
(51) Int. Cl.: C08L 51/04, C08F 279/02, C08F 279/04, C08F 287/00

(54) **NOVEL COMPOSITION FOR THE PRODUCTION OF VINYLAROMATIC MATERIALS WITH IMPACT STRENGTH IMPROVED BY A STRUCTURE-MODIFYING ADDITIVE**

(71) Applicant: Servicios Administrativos Peñoles SA de CV, C.P. 27268 Torreón Coahuila (MX)
(72) Inventor: MORALES BALADO, Graciela Elizabeth, C.P. 27268 Torreón Coahuila (MX); SORIANO CORRAL, Florentino, C.P. 27268 Torreón Coahuila (MX); ACUÑA VAZQUEZ, Pablo, C.P. 27268 Torreón Coahuila (MX); LÓPEZ GONZÁLEZ, Rodolfo, C.P. 27268 Torreón Coahuila (MX); BENAVIDES PÉREZ, Ricardo, C.P. 27268 Torreón Coahuila (MX); BOCANEGRA ROJAS, José Gertrudis, C.P. 27268 Torreón Coahuila (MX)
(74) Representative: Vogel, Andreas
(86) International application number: PCT/MX2010/000103
(87) International publication number: WO 2012/044145

(57) **Abstract**

The present invention refers to an improved composition for the production of vinyl aromatic polymers modified with rubber, in which a substantial impact resistance improvement of the final product is produced by the incorporation of a structure modifying additive in different steps of the polymerization, preferably during the process of co-continuity of phases and specially, during the inversion of phases interval. The additive is an insaturated compound of formula: 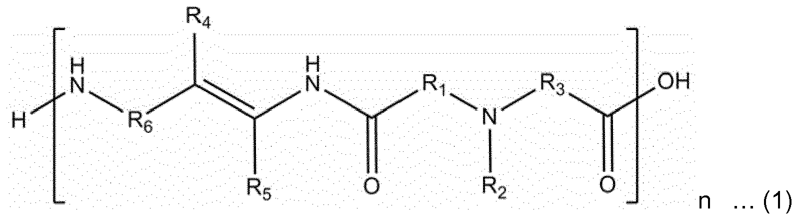 wherein:
R₁, R₃ each represents a saturated or unsaturated chain from C₁ to C₁₈, being equal or different from one another,
R₂, R₄, R₅ each represent, hydrogen, halogen or a carbonated chain from C₁ to C₁₈, being equal or different from one another,
"n" being an integer number equal or grater than 1 and where the additive can be used either without mixing it in a concentration within the range of 0.025 to 5% in weigth, or in mixtures with low molecular weight polymers in a weight ratio preferably from 5/1 to 1/5.

## Description

### TECHNICAL FIELD OF THE INVENTION

The present invention is related to a novel composition for the production of high impact polymers, and particularly it refers to a new composition in which the impact resistance of the polymer is improved by using an additive during a obtaining process of a vinyl aromatic polymer reinforced with rubber.

### BACKGROUND OF THE INVENTION

It is well known that polystyrene (PS) and poly(styrene- co- acrylonitrile) (SAN), are both thermoplastic polymers with low toughness, however, when are reinforced with rubber, a high impact polystyrene (HIPS) and a poly(acrylonitrile-butadiene-styrene) (ABS) are obtained, which correspond to thermoplastic materials with high impact resistance, and which are formed by a rigid matrix of PS and PSAN respectively, with rubber particles dispersed in said matrices.

The HIPS and the ABS can be defined as complex mixtures of polystyrene: PS-polybutadiene (PBd)- graft copolymer (PBd-g-PS), and poly(styrene- co-acrylonitrile) (PSAN)-polybutadiene (PBd)-graft copolymer (PBd-g-PSAN), respectively.

It is possible to carry out a reinforcement of fragile thermoplastic polymers through the incorporation of rubber, which causes a considerable increasing of their toughness, making them impact resistant materials, and wherein the final properties of these materials depend, among other parameters on the size and the type of morphology of the present particles. Thus, a variation in the properties and the features of HIPS and ABS can be achieved to the extent in which the rubber particles can be modified to provide different morphologies.

In the specific case of the HIPS, a typical example of morphology is that of the "Salami" type, in which the domains of the graft copolymer PBd-g-PS are embedded in the matrix PS. The domains are not purely elastomeric, since they may contain inside thereof, occluded PS, forming subdomains. The PBd is located as forming thin lamellar micro phases in the outer part of the domains and in the inner part thereof, between the subdomains of PS. The HIPS and the ABS owe their characteristics of toughness and impact resistance to these elastomeric micro phases, which, through different reinforcement mechanisms (Crazing and Shear Yielding), cause an improvement in the performance properties of these materials.

The processes for the production of HIPS include a continuous process, first in development and which is commonly used, following the mass polymerization reaction, method used by The Dow Chemical Company, for instance The US Patent N° 3,936,365 (Saunders et al, 1976); and a batch process which, used a short time later, performing the mass polymerization reaction to be continued later in suspension, method used by Monsanto, for instance The US Patent N° 4,146,589 (Dupre, 1979), which were oriented to the obtaining of HIPS at industrial scale.

Regarding the discontinuous process, generally, initially the polymerization of an homogeneous solution of a styrene monomer (ST)/Rubber, is carried out, however, once the PS homopolymer is formed, a separation of the phases of the system occurs, remaining two phases formed, one continuous, constituted by the St/Rubber solution and the other dispersed formed by the St/PS solution. In the St/Rubber phase the PS graft reaction over the Rubber takes place, while in the St/PS phase only the homopolymerization of the PS occurs. This is a heterogeneous system that remains stable, due to the PS grafts over the rubber which derives in the formation of an oil-in-oil emulsion. Later on, and once a certain quantity of PS homopolymer and PS grafts is formed over the elastomer, a co-continuity of phases takes place, and just when the viscosities in both phases are equaled, by means of stirring in the system, the "inversion of phase" occurs, whereby forming the rubber particles dispersed in a continuous St/PS phase. At the moment of the inversion of phases, the whole elastomeric particle is formed and thus the final morphology of the HIPS is established. It is important to mention that the elastomeric particles are responsible for the final properties of the material, depending at the same time on the type of morphology, as well as its size and distribution.

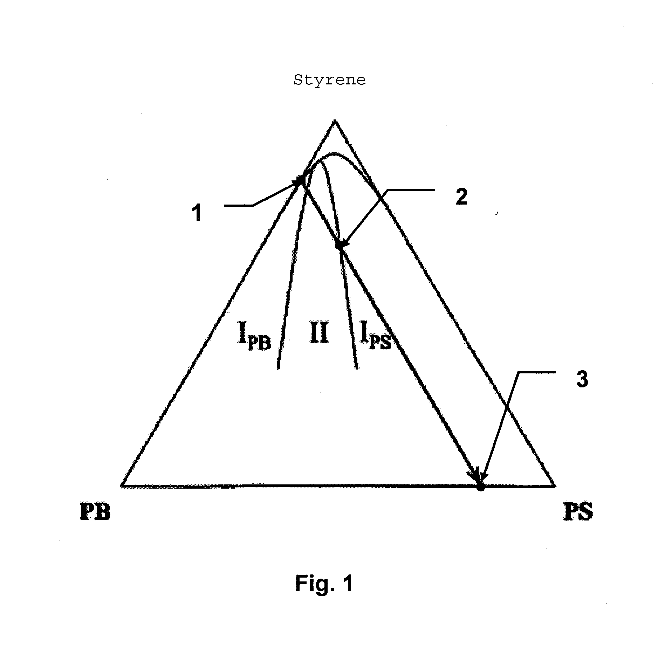

The above is depicted in the ternary phase diagram of Figure 1, in which, following the sense of points 1 to 2, the mass polymerization of styrene in the presence of rubber, takes place, where the graft reactions occur and the size and morphology type of the elastomeric phase is established, once the inversion of phases takes place (point 2), said point can be detected by the changes in the viscosity of the reaction mixture in the sigmoidal zone of the viscosity curve vs conversion, where at the beginning of the polymerization, the viscosity of the polymeric emulsion oil in oil, is ruled by the high viscosity of the solution of the elastomeric (continuous phase) phase. In the region of the inversion of phases, the total viscosity of the emulsion decreases because of the low viscosity of the polystyrene solution which now becomes the continuous phase and determines the total viscosity of the mixture. Once the inversion of phases takes place, points 2 to 3 of the phase diagram represent the polymerization at high temperatures where the styrene is polymerized until the total amount of monomer is consumed.

Depending on different factors such as the polymerization velocity of the styrene, grafts formation, kinetic and thermodynamics factors of the interface, shear stresses and the crosslinking of the elastomeric phase, the formation of different types of morphologies can take place. The differences between the different types of morphology result from the interaction between the rubber particles and the PS matrix, the intermolecular separation of the dispersed phase, PS sequences in the rubber and the mechanic treatment, among other factors. Moreover, the different reaction conditions used (stirring, type and concentration of the initiator, type and concentration of the rubber, viscosity, etc.) influence, in a complex manner the particles formation.

As to the particular features given by the different types of morphology, it can be mentioned that the materials with a "salami"-type morphology show a better impact resistance, while the "core-shell" -type provide a better toughness but the material shows good optic properties (shine and transparency).

Among the factors that affect and/or modify the morphologic structure of the disperse phase in an HIPS and/or ABS, we find: the type of rubber, as described in the international application W02008033646 (Styranec, 2008) and the US patent application N° US20060194915 (Morales-Balado et al, 2006); the temperature of reaction, as described in the European patent EP0818481 (Doyle, 2002), the stirring velocity of the reaction system, described in the same European application and in the US patent N° US6239225 (Michels et al, 2001); the type and concentration of the initiator, the density of the grafts, for example, as described in the patent of Michels et al, the use of a chain transfer agent, see the European patent EP0716664 (Schrader et al, 1997, 2005, 2006), the use of additives such as solvents like in the patent of Michels et al and the European application EP1380620 (Miyatake et al, 2004); among others.

In greater detail, in the international application of Styranec, the improvement in the impact resistance is described by the obtaining of bimodal morphology on the particle size distribution using elastomers with different molecular weights. Likewise, on the patent application of Morales-Balado et al, changes in the morphology of the elastomeric particles with different impact resistance are described through the use of blocks of copolymers of Styrene/Butadiene with different polydispersity in the polystyrene block.

In the European Patent of Doyle, the synthesis of styrene polymers with modified impact resistance is described by the use of a continuous process with stirring reactors and a turbine shaped shaft. In the description the changes in the impact resistance caused by differences in the stirring system of the turbine and anchor shaped shafts, are mainly presented, as well as the effect caused by the thermally initiated polymerization and the use of radical initiators.

In the patent of Michels et al, a continuous polymerization process for the manufacturing of a HIPS where the differences on impact resistance are shown, is described through the distribution of sizes of the bimodal particle, which is obtained from different conditions during the polymerization process, as the process of thermal and chemically initiation, the concentration of the initiator, the use of solvent, the chain transfer agent of the group of the mercaptans and variations on the stirring velocity.

In the European Patent No. 0716664 a method for the preparation of a composition of a modified aromatic monovinyl with rubber is described, which contains an initiator and a chain transfer agent and under stirring conditions, provide a capsule-type and a cell-type morphology, in a specific particle size range to improve the impact resistance.

The Patent of Michels et al, refers to the use of solvents in the polymerization reaction of a HIPS and in the application of Miyatake et al, the use of a solvent as reaction means to improve the particle size is described.

These and other documents which conform the prior art, express the necessity to obtain polymers with improved impact resistance properties, equally showing that different alternatives have been used, including the modification of the operation conditions of the base processes, or the employment of substances promoting the change in morphology, necessary to achieve said improvement.

### OBJECTIFS OF THE INVENTION

In view of the need for polymeric materials with improved impact resistance properties and the alternatives described in the current prior art, it is an objective of the present invention, providing polymeric materials with a higher impact resistance than the conventional materials with a similar composition.

It is another objective of the invention, providing polymeric materials having an impact resistance equivalent to that of other materials in the current prior art, using a lower rubber proportion in its composition, this is, offering a greater assessment of the rubber used in the formulations.

It is still another objective of the present invention, providing an improved composition for the production of a vinyl aromatic polymer modified with rubber with improved impact resistance.

Another objective of the present invention is to provide an improved composition for the production of a vinyl aromatic polymer modified with rubber, by the incorporation of a structure modifying additive.

It is still another objective of the present invention, that the incorporation of a structure modifying additive can be used in different steps of a conventional process for the production of the polymeric material, obtaining similar results.

One more objective of the present invention, is to provide an improved composition for the production of a vinyl aromatic polymer modified with rubber, where the property of impact resistance is substantially increased, without modifying the content of rubber in the reaction mixture.

Another objective of the present invention is to provide an improved composition for the production of a vinyl aromatic polymer modified with rubber, which with lesser contents of rubber than in a conventional formulation, shows an impact resistance similar to that obtained in said conventional formulation, without the addition of the additive.

This and other objects will be evident in light of the following description and the included figures.

### BRIEF DESCRIPTION OF THE INVENTION

The present invention refers to an improved composition for the production of vinyl-aromatic polymers modified with rubber, in which, by means of the incorporation of a structure modifying additive in different steps of any of the synthesis processes described in the prior art, but preferably in the period of co-continuity of phases and in the inversion interval, a substantial improvement of the impact resistance of the obtained product is produced.

The structure modifying additive is a compound with a general formula (I): 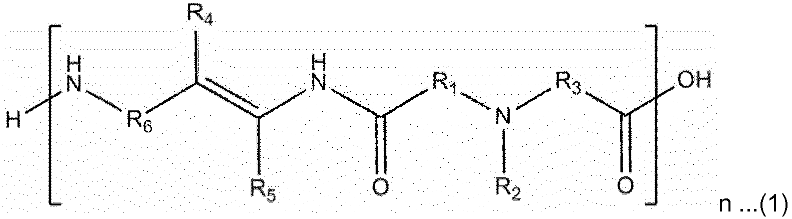 in which
R₁, R₃ each represent a saturated or unsaturated chain from C₁ to C₁₈, being equal or different from one another,
R₂, R₄, R₅ each represent hydrogen, halogen or a carbonated chain from C₁ to C₁₈, being equal or different from one another,
"n" being an integer number equal or greater than 1.

The structure modifying additive (I) can be used in combination with polymers of low molecular weight, said polymers of low molecular weight include the family of vinyl-aromatic compounds, preferably in mixtures in a structure/low molecular weight polymer from 5/1 to 1/5 in weight modifying additive, relationship.

### BRIEF DESCRIPTION OF THE FIGURES

Figure 1 is a ternary diagram of phases of the PB system-Styrene-PS showing the zone of "inversion of phases" in point 2.
Figure 2 is a first photograph observed through a transmission electronic microscopy (TEM) of the material obtained according to the example 1.
Figure 3 is a second photograph observed through a transmission electronic microscopy of the material obtained according to the example 1.
Figure 4 is a first photograph observed through transmission electronic microscopy of the material obtained according to the example 2.
Figure 5 is a second photograph observed through a transmission electronic microscopy of the material obtained according to the example 2
Figure 6 is a first photograph observed through a transmission electronic microscopy of the material obtained according to the example 3.
Figure 7 is a second photograph observed through a transmission electronic microscopy of the material obtained according to the example 3.

### DETAILED DESCRIPTION OF THE INVENTION

The present invention refers to a novel composition for the preparation of impact resistant vinyl aromatic thermoplastic materials which are obtained from:
a) 94.975-60% in weight from a vinyl aromatic monomer,
b) 5-35% in weight of a rubber such as a conjugated diene or a copolymer, based on a conjugated diene and a vinyl aromatic compound; and
c) 0.025-5% in weight of a structure modifying additive.

In a particular way the present invention refers to the obtaining of HIPS or ABS with the described composition, showing particles preferably salami -type.

According to a preferred embodiment for the realization of the present invention, the production process of impact resistant polymers is a polymerization in sets, although the teachings of the invention can be applied to continuous or semi-continuous polymerization processes, from a solution of styrene or acrylonitrile, or any other vinyl aromatic monomer, with polibutadiene or copolymers based in a diene and a vinyl aromatic monomer, the formulation is incorporated with a structure modifying additive having a general formula (1): 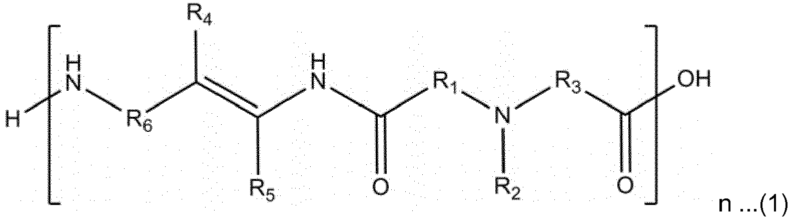 In which:
R₁, R₃ each represents a saturated or unsaturated chain from C₁ to C₁₈, being equal or different from one another,
R₂, R₄, R₅ each represents, hydrogen, halogen or a carbonated chain from C₁ to C₁₈, being equal or different from one another,
"n" being an integer number equal or greater than 1.

The production of said polymers is carried out by means of a mass polymerization and suspension process, described in the prior art, using initiators preferably of the radical azo type, peroxide or hidroperoxide, and preferably mono or polyfunctional peroxides, and variable stirring between 40-350 rpm, with a system preferably of the anchor-turbine type until reach the inversion of phases.

The structure modifying additive part from the invention, can be added in different steps of the process, but preferably during the inversion of phases interval, in order to achieve optimal results in the improvement of the impact resistance properties.

Once the inversion of phases occurs, generally, between 20-40% in conversion weight, the reaction is continued in suspension using suspension means which basically consists on water, polyvinyl alcohol, nonylphenol, and sodium chloride in variable proportions, however, any other suspension means known or described in the prior art for polymerization processes in suspension, can be used.

The rubbers that can be employed in the present invention are 1,3-butadiene, isoprene, 2,3-dimethyl- 1, 3-butadiene, copolymers in lineal or radial blocks, in perfect blocks or partially randomized types SB,SBR,SBS,BSB or multiple blocks (SB)n, being S a vinyl aromatic polymer and B a conjugated diene, n is an integer number, and where the elastomeric part can be partially or totally hydrogenated. In the case of SB copolymers, the S/B composition of the copolymer can vary between 5/95 to 80/20 in weight, the molecular weight of rubber being able to vary within the interval of 100,000 to 450,000 g/mol.

For the production of materials with impact resistance, in the present invention, the vinyl aromatic monomer to be employed is selected from the group that includes: vinyl toluene, styrene, α-styrene, chlorine-styrene and mixtures between one another or with other copolymerizable monomers such as acrylic monomers, metacrylics, acrylonitrile and maleic anhydride.

The graft polymerization reaction of the vinyl aromatic monomer over the rubber and the addition of the structure modifying additive part of the present invention, can be performed by a mass polymerization process, solution, suspension and/or emulsion, as well as any other modification and/or combination thereof such as the mass-suspension polymerization processes.

It is also possible to add, during the process of polymerization (thermally induced or by the employment of compounds that could generate free radicals of azo or peroxide type), mineral oil and a chain transfer agent (molecular weight regulator), used together or separately, in order to simultaneously control the proportion of polystyrene grafted in the rubber and the molecular weight of the polystyrene matrix, with this, it is possible to regulate the properties of the flow of the impact polystyrene depending on the application and the kind of processing to which will be submitted.

Also, in order to avoid degradations provoked by high temperatures and high mechanical stress during the final processing of the material, primary antioxidants of phenolic and /or hindered phenolic type, secondary antioxidants phosphite and /or phosphate type, also light stabilizers either in the process of polymerization or at the moment of processing the materials, can be used.

Having described in a general manner the invention a better understanding thereof can be obtained by referring to specific examples which are cited below with the purpose of illustrating the present invention but without limiting the same.

### Example 1 HIPS Production

In a reactor with capacity of 1 gallon, 920g (92% in weight ) of styrene monomer and 80 g (8% in weight) of polybutadiene (PB) were added; it is stirred at 45 rpm at room temperature until the total dissolution of the elastomer. At this moment, 0.1% in weight benzoyl peroxide (BPO) was added and it was polymerized at 80°C maintaining the constant stirring at 60 rpm until the inversion of phases (25-30% in weight of conversion). In the moment of the inversion of phases, which is identified by a considerable change in the viscosity of the mixture, 0.2% in weight of the structure modifying additive with the composition described in Table 2, is added:

**Table 1.- Composition of the additive used in the HIP or ABS synthesis.**

| Structure | Component (C3) | (D2/C3) Relationship | n |
|---|---|---|---|
| R₁, R₃ = C₅ H₁₀ | Polyester of Low molecular weight (Mn) | 84/16 | 1 |
| R₂ = C₁₀ H₂₀ | | | |
| R₄, R₅ = H | | | |
| R₆ = C₂H₄ | | | |

After 30 minutes, 0.1% in weight of tert-butyl perbenzoate (TBPB) was incorporated to the reaction system, followed by the suspension medium. The latter consisted of 2 Its of water, 1.8g of polyvinylic alcohol, 0.7 g of nonyl phenol and 1.7 of sodium chloride. The polymerization reaction was continued with a stirring velocity of 60-700 rpm following a temperature-time ramp program of 2 hours at a 125°C and 2 hours a 145°C. Later, the product in the shape of pearls was filtrated, washed and dried,

The resulting material in the shape of pearls, was submitted to the compression molding process from which probes with established dimensions were obtained for impact resistance mechanical tests according to the ASTM D-256 norm. The corresponding values from said determinations are presented on Table 2.

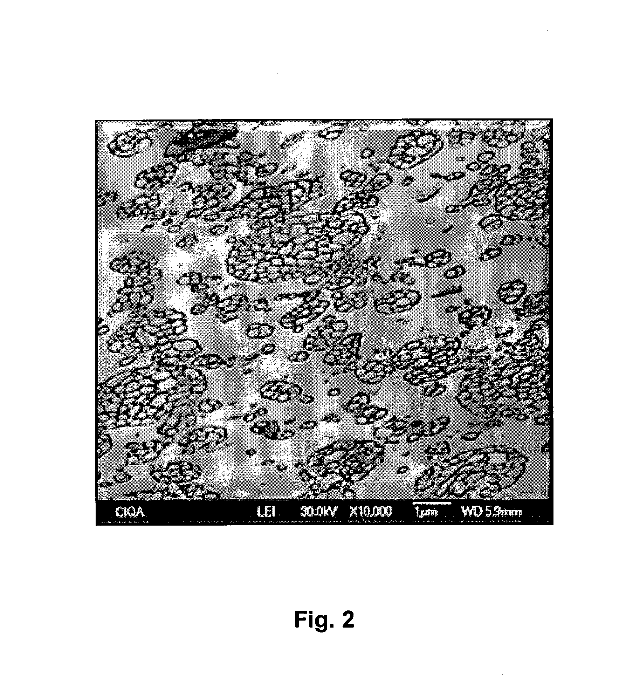

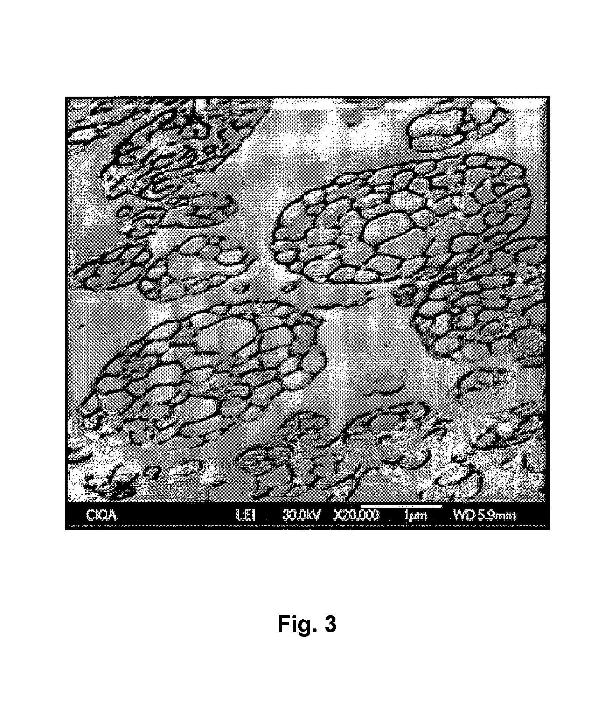

The morphology of the particles was observed by a transmission electronic microscopy (MET), the samples were previously cut in cryo ultramicrotome and stained subsequently with osmium tetroxide, according to the technic widely reported by Kato (Kato, k. Polym. Eng. Sci. 7, 38, 1967), the photographs are shown in Figures 2 and 3.

### Example 2 HIPS production

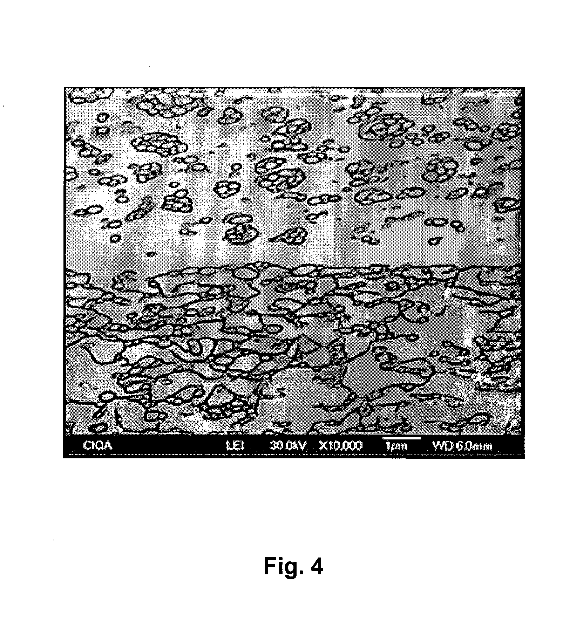

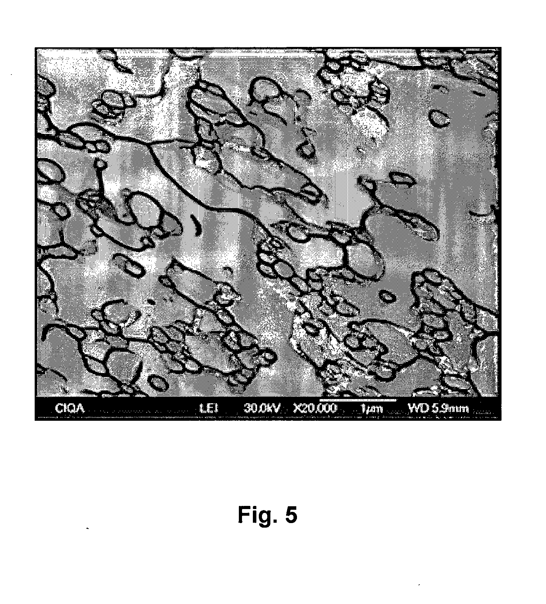

Similarly as in the example 1, but using 6% in weight of polybutadiene. The resulting morphology is shown in Figures 4 and 5 and the corresponding values to said determinations are represented in table2.

### Example 3 ABS production

In a reactor with capacity of 1 gallon, 940g (94% in weight) of an azeotropic relation of styrene monomer (S) and acrylonitrile (AN) (77.6 s/22.4 an), and 60 g (6% in weight) of a copolymer in bloks (SB) with composition S/B=30/70, 0.2% in weight of ter dodecylmercaptan as a transfer agent and 5% in weight of mineral oil are added and it is stirred at 45 rpm at room temperature until the total dissolution of the elastomer. At this point, 0.025% in weight of (BPO) benzoyl peroxide is added and is polymerized at 80°C maintaining the stirring constantly at 60 rpm until the inversion of phases (25-30% in conversion weight). The structure modifying additive was added before the inversion of phases, with the same composition and dosification of the example 1. Later to this, 0.1 % in weight of tert-butyl perbenzoate (PBTB) was incorporated to the system reaction followed by a suspending mean. The later is comprised of 2lts of water, 1.8 g of polyvinylic alcohol, 0.7g of nonyl phenol and 1.7g of sodium chlorine. The polymerization reaction was continued with a stirring velocity of 650-700 rpm following a temperature- time ramp program of 2 hours at 125°C and 2 hours at 145°C. Finally, the product (pearls) was filtrated, washed and dried.

The pearl shaped material is submitted to a compression molding technique from which probes were obtained with established dimensions for impact resistance mechanical testing, according to the ASTM D-256 norm. The corresponding values for these determinations are indicated in Table2.

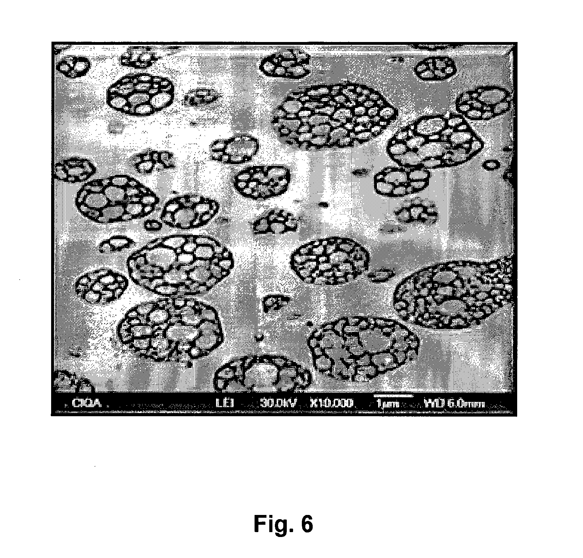

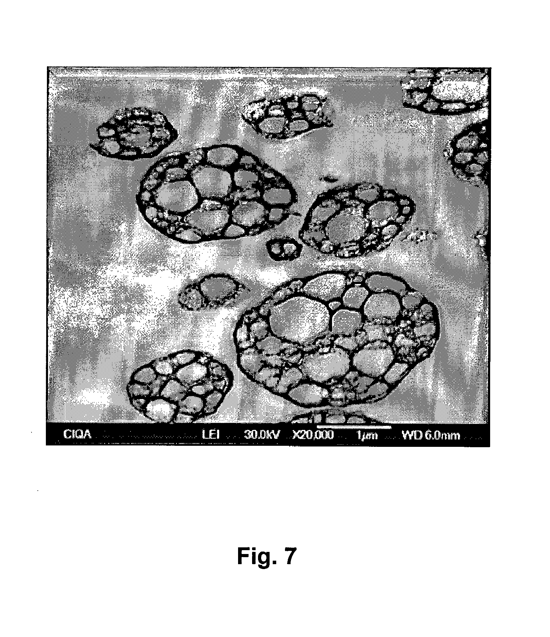

The morphology of the rubber particles was observed by transmission electronic microscopy, the samples were previously cut in a cryo ultramicrotome and were subsequently stained with osmium tetra -oxide. The corresponding photographs can be observed in Figures 6 and 7, in the case of the ABS (example 3) the resulting morphology from the use of the additive of the invention is more uniform of the salami-type, with particles slightly around 1-2 microns extending along the continuous phase. However it can be seen that the continuous phase domains are wider than the HIPS morphologies with 6% of rubber (Figures 4 and 5) and the rubber continuous web does not appear quite defined, which explains that in this system the increase in the impact resistance is lower (42.4%) than the HIPS system whose input to the impact is of 62%.

The corresponding values to the impact resistance determinations in the different materials produced according to examples 1 to 3 previously described, are presented in Table 2.

**Table 2.- Obtained Formulations, their corresponding reference targets and impact resistance.**

| **Material** | **%in weight of rubber** | **Type of rubber** | **Impact resistance (J/m)** | |
|---|---|---|---|---|
| | | | **Without additive** | **With additive** |
| **HIPS** | **8** | **Pb** | **70.53** | **150.6** |
| **HIPS** | **6** | **Pb** | **43.2** | **70.92** |
| **ABS** | **6** | **Copolimer Sb (30/70)** | **61.6** | **87.71** |

The results shown in table 2 allow reaching the following conclusions:
i. For the same rubber content, in the conventional range of 8% in weight, an HIPS material shows a substantial increasing in the impact resistance between a formulation without the use of the additive of table 1 from 770.53 to 150.6 J/m, this is an increasing of 113.53%
ii. For an HIPS with a rubber reduced content of 6%, the increasing in the impact resistance is of about 64.2%, enough to match the obtained resistance with that of a HIPS with a rubber conventional content of 8%.
iii. In the case of an ABS composition with a 6% of rubber, an improvement of 42.4% in the impact resistance is obtained, from 61.6 in an ABS without additive, an 87.71 in an ABS with the additive having the composition of Table 1 and in a proportion as described in example 3. The material obtained in this way has a resistance exceeding that of the conventional HIPS.
iv. The first two rows of table 2 also show that approximately a 71 J/m impact resistance is obtained, when a HIPS is produced with a rubber content of 6% (which represents a reduction of 25% in the rubber content) with respect to a HIPS with 8% of rubber. This is translated in a real saving of the rubber consumption for the production of the polymers.

The substantial improvement in impact resistance can be directly related to the developed salami shaped morphology, wherein the domains of the elastomeric phase are well defined forming an interpenetrated web (Figures 2 and 4) reaching similar impact resistance values with 8% of rubber by using the additive and reducing in 25% the quantity of rubber, which represents an important advantage not only in the technical field, but also in the commercial one.

The conclusion derived from the analysis of the result from the examples, is that the use of a structure modifying additive of the present invention in the preparation of compositions for the production of vinyl aromatic materials results in an visibly improved impact resistance, and with a commercial impact which is also relevant.

While the examples allow a better understanding of the object of the invention and reflect the best way of use thereof for some of the alternatives of available processes in the technical field for the production of polymers with high impact resistance, it will be evident for a person skilled in the art that the teachings of the present invention can be applied to other processes, or that the indicated percentages for the mixtures, can be modified within the conventional ranges, without this could be considered as leaving the scope of the invention.

## Claims

1. Having described the invention, it is considered as novel, and as such we claim as our own the content in the following claims: 1. A composition to produce impact resistant vinyl aromatic thermoplastic materials, **characterized in that** comprises:
a. between 94.975%-60% in weight of a vinyl aromatic monomer,
b. between 5-35% in weight of a rubber such as a conjugated diene or a copolymer based on a conjugated diene and a vinyl aromatic compound, and
c. between 0.025-5% in weight of a structure modifying additive having the general formula: 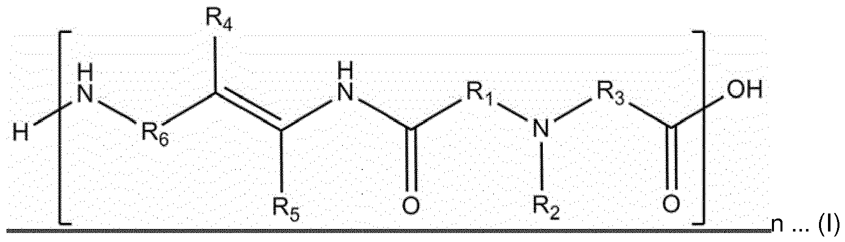 wherein:
R₁, R₃ each represents a saturated or unsaturated chain from C₁ to C₁₈, being equal or different from one another,
R₂, R₄, R₅ each represents, hydrogen, halogen or a carbonated chain from C₁ to C₁₈, being equal or different from one another,
"n" being an integer number equal or greater than 1.

2. A composition according to claim 1 wherein the structure modifying additive is added without mixing with vehicles.

3. A composition according to claim 1 wherein the structure modifying additive is added as a mixture of polymers comprising the family of vinyl aromatic compounds comprising the family of the ethers, esters, amines and amides.

4. A mixture of the additive according to claim 3 wherein the additive is found in a ratio from 5/1 to 1/5 in weight.

5. A composition according to claim 1 wherein the structure modifying additive is added during the interval of inversion of phases of the reaction.

6. A composition according to claim 5 wherein the structure modifying additive is added once.

7. A composition according to claim 5 wherein the structure modifying additive is added on intermittent dosages.

8. A composition according to claim 1 wherein the conjugated diene is selected form the group comprising: 1,3-butadiene, isoprene, 2,3-dimethyl-1, 3-butadiene, copolymers in linear or radial blocks, in perfect or partially randomized blocks from the type of SB,SBR,SBS,BSB or multiple blocks (SB)n, wherein S is a vinyl aromatic polymer, B is a conjugated diene and n is an integer number, and wherein a elastomeric part can be partially or totally hydrogenated.

9. A composition according to claim 1, wherein the composition of the copolymers in blocks can be varied between 5/95 to 80/20 in weight and mixtures therebetween, preferably PS/PB copolymers with composition between 30/70 to 20/80 in weight, the molecular weight of the copolymer in blocks being able to vary in the interval from 100,000 to 450,000 g/mol.

10. A composition according to claim 1 wherein the vinyl aromatic monomer is selected from vinyl toluene, styrene, α-styrene, chloride-styrene, and mixtures therebetween or with another copolymerizable monomer, such as , acrylic monomers, methacrylic, acrylonitrile and maleic anhydride.

11. A composition according to claim 1 wherein the radical initiator to be used in the production of the vinyl aromatic thermoplastic material is of the azo, peroxide, hyperperoxide type and preferably mono or polyfunctional peroxides.

12. A composition according to claim 1 wherein the process of producing the impact resistant thermoplastic is of the mass-suspension type, either continuous or discontinuos.
